# EUROPEAN PATENT SPECIFICATION

(11) **EP 2 168 663 B1**
(45) Date of publication and mention of the grant of the patent: **03.08.2011**
(21) Application number: 09170984.0
(22) Date of filing: 22.09.2009
(51) Int. Cl.: B01D 53/94, B01J 23/04, B01J 23/50, F01N 3/035, B01J 37/02

(54) **Exhaust Gas Purification Filter, and Manufacturing Method thereof**
Abgasreinigungsfilter und Herstellungsverfahren dafür
Filtre de purification de gaz d'échappement et son procédé de fabrication

(30) Priority: 24.09.2008 JP 2008244882
(43) Date of publication of application: 31.03.2010
(73) Proprietor: Honda Motor Co., Ltd., Tokyo 107-8556 (JP); Kyushu University, National University Corporation, Fukuoka-shi Fukuoka 812-8581 (JP)
(72) Inventor: Mori, Takeshi, Saitama 351-0193 (JP); Suzuki, Norihiko, Saitama 351-0193 (JP); Furukawa, Atsushi, Saitama 351-0193 (JP); Teraoka, Yasutake, Fukuoka -shi 812-8581 (JP)
(74) Representative: Böhm, Brigitte

(56) References cited:
- JP-A- 2003 170 051
- JP-A- 2006 336 506
- JP-A- 2007 069 153
- NEEFT ET AL: "Catalysts for the oxidation of soot from diesel exhaust gases. I. An exploratory study" APPLIED CATALYSIS B: ENVIRONMENTAL, ELSEVIER, vol. 8, no. 1, 29 February 1996 (1996-02-29), pages 57-78, XP022216889 ISSN: 0926-3373

## Description

### BACKGROUND OF THE INVENTION

### Field of the Invention

The present invention relates to an exhaust gas purification filter for use in cleaning particulate matter (hereinafter, may be referred to as PM) included in exhaust gas discharged from an internal combustion engine, and a manufacturing method thereof. In particular, the present invention relates to an wall-flow exhaust gas purification filter which enables combustion of PM at low temperatures independent of the contact state of the PM with a catalyst, and a manufacturing method thereof.

### Related Art

As devices for cleaning PM contained in diesel exhaust gas, a diesel fine particle filter device (hereinafter, may be referred to as a DPF (diesel particulate filter)), and a catalyzed soot filter (hereinafter, may be referred to as CSFs), which are catalyst DPFs have been known. In these devices for cleaning (purification devices), purification of the exhaust gas can be carried out by collecting PM with a filter, followed by combustion of the collected PM.

Meanwhile, combustion of PM generally necessitates a high temperature of 550°C to 650°C. Therefore, continuous combustion of PM in practical use of diesel-powered automobiles has been difficult, and thus the collected PM gradually accumulates on the filter. Accordingly, for the purpose of avoiding excessive accumulation of the collected PM in a purification device of a continuous regeneration system, forced combustion of the accumulated PM (forced regeneration) is executed using any means for elevating the temperature, thereby attempting to regenerate the filter, under the current conditions.

In addition, also in a CSF in which purification is carried out using a catalyst, the combustion temperature of PM cannot be lowered to a satisfactory level. Since the reaction between the PM and the catalyst is a solid-solid reaction, combustion of the PM in a favorable contact state with the catalyst occurs while combustion of the PM in poor contact state hardly occurs.

When a catalyst is loaded on a PM collection carrier used in CSF, the catalyst is generally applied on the wall surface or pores of the PM collection carrier. Therefore, the PM gradually accumulates on the catalyst applied on the wall surface or the pores, as the amount of the collected PM increases. In this stage, the PM present on the interface (contact surface) with the catalyst exhibits favorable accessibility with the catalyst; however, the PM deposited on places other than the interface becomes less likely to contact with the catalyst. As a result, even when a catalyst having a high activity toward the PM is used, the performance of the catalyst cannot be sufficiently achieved because of the contact state.

For example, in Patent Document 1, a technique is disclosed in which functions of the catalyst are segregated by applying the catalyst to provide a layered structure on a three dimensional structure. According to this technique, the reaction of the catalyst components with the three-dimensional structure can be inhibited by providing catalyst layers each having different characteristics on the three-dimensional structure, and deterioration of the catalyst activity can be prevented by suppressing deterioration resulting from a reaction that may occur between the catalyst layers. Consequently, a purification material having a high activity can be reportedly obtained.

Moreover, in Patent Document 2, a carrier in which a porous ceramic filtering material is used as a PM collection carrier, and a catalyst is applied on the inner face of the porous ceramic pores has been proposed. By loading the catalyst on the inner face of the porous ceramic pores, combustion of PM can be executed in the process of the exhaust gas passing through the filtering material, whereby the PM can be reportedly removed by combustion concomitant with filtration.

Furthermore, in Patent Document 3, a technique of loading a catalyst to be localized into DPF pores has been proposed. According to this technique, sequential combustion of the PM collected with high efficiency can be reportedly executed in the pores on which the catalyst was loaded, while suppressing increase in the exhaust pressure drop and elevating the PM collection ratio.

In addition, Patent Document 4 has proposed an exhaust gas purification filter in which a low contact active catalyst, which exhibits high activity independent of accessibility with the PM, is used in combination with a high contact active catalyst that exhibits a high activity when the accessibility with the PM is high. According to this exhaust gas purification filter, a high contact active catalyst is placed inside the voids of the filtering material, while the low contact active catalyst is placed on the surface of the filtering material, whereby continuous combustion of PM is enabled at a low temperature, and forced regeneration at a low temperature is enabled even though the PM has accumulated.
Patent Document 1: Japanese Unexamined Patent Application, First Publication No. 2001-157845
Patent Document 2: Japanese Unexamined Patent Application, First Publication No. 2002-221022
Patent Document 3: Japanese Unexamined Patent Application, First Publication No. 2004-76717
Patent Document 4: Japanese Unexamined Patent Application, First Publication No. 2007-69153
   JP 2003170051 discloses a catalyst for burning particulate matter comprising Ag and K

### SUMMARY OF THE INVENTION

The present invention is defined by the appended set of claims. However, according to the technique disclosed in Patent Document 1, the catalyst on the upper layer can be in contact with the PM due the reaction between the PM and the catalyst that is a solid-solid

.

reaction, but it is difficult to sufficiently achieve the performance of the catalyst on the lower layer since the catalyst on the lower layer cannot be in contact with the PM. In addition, also with respect to the catalyst on the upper layer, the PM layered at sites other than the contact sites of the PM with the catalyst cannot be subjected to the catalytic effect, and thus combustion of such PM at low temperatures cannot be performed.

Furthermore, according to the techniques disclosed in Patent Document 2 and Patent Document 3, as the amount of the collected PM increases, PM no smaller than the micropore size of the PM collection carrier gradually accumulate on the surface of the filtering material. Since the PM accumulated on the surface of the filtering material cannot be in contact with the catalyst, performance of the catalyst cannot be sufficiently achieved even in a case in which a catalyst that is highly active toward the PM is loaded.

In this respect, according to the technique of Patent Document 4, the performance possessed by the low contact active catalyst and the high contact active catalyst, respectively, can be achieved. However, still more efficient cleaning of PM has been demanded along with tightening of emissions control in recent years.

The present invention was made in view of the foregoing problems, and an object thereof is to provide an exhaust gas purification filter that enables continuous combustion of PM in a more efficient manner than those traditionally employed, even in the case of low-temperature exhaust gas discharged from diesel-powered automobiles in practical use and that allows for forced regeneration at low temperatures in a more efficient manner than those traditionally employed, even in the case in which the PM has accumulated, and a manufacturing method of such a filter.

In order to solve the problems described above, the present inventors thoroughly investigated by focusing attention on accessibility of PM with a catalyst, and catalyst compositions. Consequently, it was found that by using a high contact active catalyst including Ag and a low contact active catalyst including K in combination, combustion of PM at low temperatures is enabled independent of the contact state or accumulation state of the PM, thereby achieving the present invention. More specifically, the present invention provides as in the following.

According to a first aspect of the present invention, an wall-flow exhaust gas purification filter produced according to the inventive method, which is disposed in an exhaust passage of an internal combustion engine, and cleans particulate matter in exhaust gas discharged from the internal combustion engine, includes an exhaust gas inlet path through which the exhaust gas enters, a filtering material that forms a partition wall of the exhaust gas inlet path and has voids, and an exhaust gas outlet path through which the exhaust gas, which had entered the exhaust gas inlet path and passed through the filtering material, exits, in which a low contact active catalyst, which includes K and exhibits high activity independent of accessibility with the particulate matter, is supported at a surface of the partition wall, and in which an inner surface of the voids in the filtering material supports a high contact active catalyst that includes Ag and exhibits high activity when the accessibility with the particulate matter is high.

In the exhaust gas purification filter according to the first aspect, a low contact active catalyst that exhibits high activity independent of the accessibility with the PM, and a high contact active catalyst that exhibits high activity when the accessibility with the PM is high are placed at a site where high accessibility with the PM is provided, and a site where low accessibility therewith is provided, respectively. More specifically, the high contact active catalyst is loaded in the voids of the filtering material which corresponds to the site where a high accessibility with the PM is provided, and the low contact active catalyst is loaded on the surface of the filtering material which corresponds to the site where a low accessibility with the PM is provided.

The term "accessibility" referred to herein means a contact proportion of PM with the catalyst, based on the amount of the accumulated PM. The phrase "when accessibility is high" refers to a case in which almost all of the accumulated PM has a contact point with the catalyst, and the phrase "when the accessibility is low" refers to a case in which almost none of the accumulated PM has a contact point with the catalyst. In other words, a lower amount of the PM leads to an increase in the contact proportion, whereby accessibility becomes high.

Since the high contact active catalyst enables sufficient combustion of PM at low temperatures when it is in a high contact state with the PM, continuous combustion of the PM is enabled in practical use of diesel-powered automobiles. In particular, the high contact active catalyst including Ag for use in the present invention exhibits a very high PM combustion activity. With respect to the source of high-level activation by using Ag, it is believed that the improvement in PM combustion performance is due to an active species Ag₂O on the Ag surface.

The low contact active catalyst enables combustion of the PM even at low temperatures in a high contact state with the PM, and also enables combustion of the PM at low temperatures in a low contact state. Such advantages are speculated to be attained since combustion of the PM is enabled even in a low contact state due to transfer of an alkali metal or the like as well as a melt effect of a transition metal or the like. Particularly, the low contact active catalyst including K for use in the present invention enables combustion of PM at low temperatures independent of the contact state. Such advantages are believed to result from ease in transfer and low ionization energy of particularly K among alkali metals, leading to high activity toward the PM.

In general, when purification of exhaust gas is carried out using a DPF, the PM having a diameter smaller than that of the voids of the filtering material enters into such voids and is collected, while the PM having a diameter larger than that of the voids is collected on the surface of the filtering material. Since the PM having a smaller particle size occupies less volume, the volume of the PM collected in the voids of the filtering material is small, whereby a high accessibility of the PM with the catalyst is provided in the voids of the filtering material. Moreover, in the voids of the filtering material, the PM having a diameter smaller than that of the voids in a small volume can enter the gaps among catalyst particles; therefore, an increase of contact points between catalytic site and the PM is presumed to be enabled.

To the contrary, since the PM collected on the surface of the filtering material has a particle size larger to some extent, layering occurs as the amount of collection increases, whereby low accessibility with the catalyst is provided, and ultimately leads to the PM not contacting with the catalyst.

Therefore, according to the present invention in which the high contact active catalyst having the effect as described above is loaded in voids of a filtering material which serve as a site where high accessibility with the PM is provided, along with loading the low contact active catalyst on the surface of the filtering material which corresponds to a site where low accessibility with the PM is provided, the performance of each catalyst can be sufficiently achieved, and thus combustion of the PM is enabled at low temperatures more efficiently as compared to those traditionally employed. Even though PM has accumulated, forced regeneration can be carried out at low temperatures more efficiently as compared to those traditionally employed. In addition, deterioration of the catalyst, and loss of the fuel mileage due to forced regeneration can be suppressed, and a load on an automobile can be reduced. Furthermore, as a result of enabling the catalyst to be effectively utilized, the cost can be reduced in producing the exhaust gas purification filter.

According to a second aspect of the present invention, in the exhaust gas purification filter according to the first aspect, the exhaust gas inlet path and the exhaust gas outlet path are formed with a plurality of cells disposed to be alternately adjacent via the filtering material; the cells that form the exhaust gas inlet path are open at an end on an upstream side, and sealed at an end on a downstream side; and the cells that form the exhaust gas outlet path are sealed at the end on the upstream side, and open at the end on the downstream side.

The exhaust gas purification filter according to the second aspect is a so-called wall-flow exhaust gas purification filter, which is configured with a plurality of cells. Since this exhaust gas purification filter has a honeycomb structure, it can efficiently purify the exhaust gas.

According to a third aspect of the present invention, in the exhaust gas purification filter according to the first or second aspect, the filtering material includes a porous ceramic.

Since the material of the exhaust gas purification filter according to the third aspect is configured with a porous ceramic, it has voids sufficient for supporting the high contact active catalyst. In addition, satisfactory durability is imparted even under high temperature conditions from forced regeneration and the like.

According to a fourth aspect of the present invention, in the exhaust gas purification filter according to any one of the first to third aspects, the low contact active catalyst includes at least one transition metal element.

The exhaust gas purification filter according to the fourth aspect can provide higher catalytic activity by using a catalyst further including at least one transition metal element. Moreover, since the low contact active catalyst is supported entirely on the surface of the filtering material in the exhaust gas purification filter according to the present invention, the cost can be reduced in production of the exhaust gas purification filter as compared with a case in which an expensive catalyst is used that includes a noble metal or the like.

According to a fifth aspect of the present invention, a manufacturing method of the wall-flow exhaust gas purification filter includes: a high contact active catalyst loading step of passing a high contact active catalyst, which comprises Ag and exhibits high activity when accessibility with the particulate matter is high, through a filtering material having voids, to cause the high contact activity catalyst to be supported on an inner surface of the voids of the filtering material; and a low contact active catalyst loading step of causing a low contact active catalyst, which comprises K and exhibits high activity independent of accessibility with the filtering material being high, to be supported by applying thereof to the surface of the filtering material to which the high contact active catalyst had been applied to the inner surface of the voids inside the filtering material in the high contact active catalyst loading step.

According to the method of manufacturing a wall-flow exhaust gas purification filter of the fifth aspect, the high contact active catalyst can be loaded on the inner surface of the voids of the filtering material, a site having a high accessibility with the PM is provided, and the low contact active catalyst can be loaded on a surface of the filtering material, a site having low accessibility with the PM is provided. Thus, according to the exhaust gas purification filter obtained by this manufacturing method, effects similar to those of the exhaust gas purification filter according the first to fourth aspects described above can be achieved.

According to the present invention, continuous combustion of PM in a more efficient manner than those traditionally employed is enabled even in the case of low-temperature exhaust gas discharged from diesel-powered automobiles in practical use, and forced regeneration can be carried out at low temperatures more efficiently as compared to those traditionally employed, even in a case in which the PM has accumulated. Therefore, loss of the fuel mileage due to forced regeneration, as well as deterioration of the catalyst can be suppressed, and in turn, the load on the automobile can be reduced.

In addition, according to the present invention, since the catalyst can be used distinctively to meet the state of accumulation of PM, the amount of a catalyst including an expensive noble metal used can be reduced. Therefore, the cost can be reduced in production of an exhaust gas purification filter.

### BRIEF DESCRIPTION OF THE DRAWINGS

FIG. 1 shows a schematic cross-sectional view of an exhaust gas purification filter;
FIG. 2 shows an enlarged view of a part P in FIG. 1; and
FIG. 3 shows an enlarged view of a part Q in FIG. 2.

### DETAILED DESCRIPTION OF THE INVENTION

Hereinafter, embodiments of the present invention are explained with reference to the drawings.

### Exhaust Gas Purification Filter

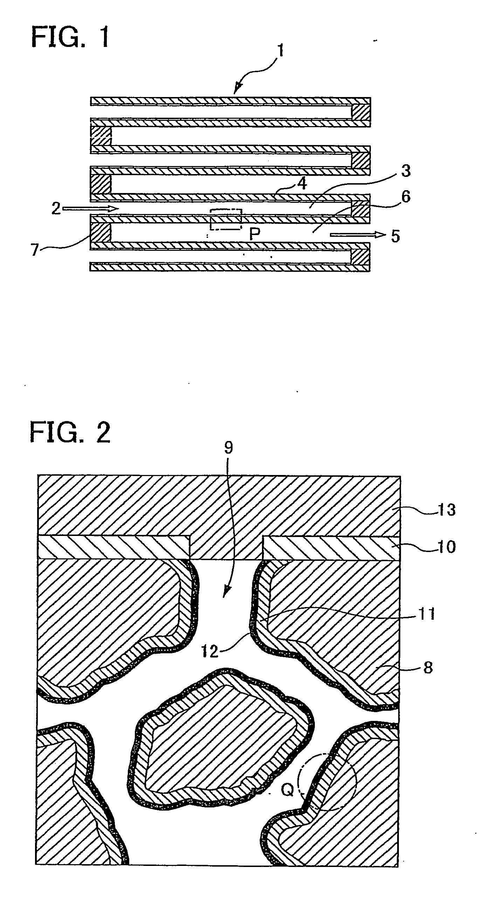

FIG. 1 shows a schematic cross-sectional view that depicts a cross-section of an exhaust gas purification filter 1 according to an embodiment of the present invention along an exhaust gas inlet direction. The exhaust gas purification filter 1 is a wall-flow type DPF, and has an exhaust gas inlet path 3 through which the exhaust gas 2 (before passing the filtering material) enters, a filtering material 8 that forms a partition wall 4 of the exhaust gas inlet path 3, and an exhaust gas outlet path 6 through which the exhaust gas 5 (after passing the filtering material), which had flowed in the exhaust gas inlet path 3 and thereafter filtered by passing through the filtering material 8, exits. In addition, the end on a downstream side of the exhaust gas inlet path 3, and the end on an upstream side of the exhaust gas outlet path 6 are sealed with a sealing material 7.

In the present embodiment, for example, the exhaust gas 2 (before passing the filtering material) flows into the exhaust gas inlet path 3 of the exhaust gas purification filter 1, and passes through the filtering material 8, thereby being purified, and is discharged from the exhaust gas outlet path 6 as the exhaust gas 5 (after passing the filtering material).

FIG. 2 shows an enlarged view of a part P in FIG. 1. As shown in FIG. 2, the filtering material 8 has the exhaust gas inlet path 3 and voids (pores) 9 that connect the exhaust gas outlet path 6. Additionally, a low contact active catalyst 10 is loaded on the surface of the exhaust gas inlet path 3 side of the filtering material 8. A high contact active catalyst 11 is loaded on the interior surface of the voids 9 of the filtering material 8.

In the present embodiment, PM 12 having a diameter no greater than the diameter of the voids 9 of the filtering material 8 (hereinafter, referred to as "PM no larger than the micropore size") pass the voids 9, and contact with the high contact active catalyst 11 loaded on the interior surface of the voids 9. In addition, PM 13 having a diameter no less than the diameter of the voids 9 of the filtering material 8 (hereinafter, referred to as "PM no smaller than the micropore size") contact with the low contact active catalyst 10 loaded on the surface of the exhaust gas inlet path 3 side of the filtering material 8 without passing through the voids 9.

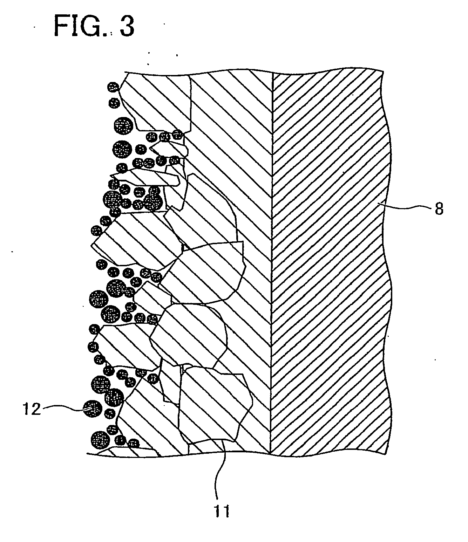

FIG. 3 shows an enlarged view of a part Q in FIG. 2. As shown in FIG. 3, the PM 12 no larger than the micropore size can enter gaps of like catalyst particles of the high contact active catalyst 11 loaded on the interior surface of the voids 9, and as a result, the contact points of the PM with the active point of the catalyst increase.

### Filtering Material

The filtering material 8 used in the present embodiment is not particularly limited. A known filtering material can be used as long as it has voids (pores) 9 which can support the high contact active catalyst 11, and can withstand the combustion temperature of PM. As the filtering material 8 which may be used in the present embodiment, for example, porous ceramics, metal meshes and the like are exemplified. Among these, a porous ceramic is preferably used.

The thickness of the filtering material 8 which may be used in the present embodiment is not particularly limited, and it may be selected appropriately depending on the desired extent of purification, performance of the catalyst used, the size of the voids 9 of the filtering material 8, porosity, and the size of the purification device in which the exhaust gas purification filter 1 is used. The thickness of the filtering material 8 in the present embodiment is preferably no less than 254 µm and no greater than 380 µm, and still more preferably no less than 254 µm and no greater than 310 µm. When the thickness of the filtering material 8 falls within this range, the catalyst can be applied in an amount most suitable for the amount of PM to enter the voids 9, whereby the catalyst performance can be sufficiently achieved.

The size of the voids 9 and porosity of the filtering material 8 which may be used in the present embodiment are not particularly limited. They may be selected appropriately depending on the desired degree of purification, performance of the catalyst used, the thickness of the filtering material 8, and the size of the purification device in which the exhaust gas purification filter 1 is used. The size of the voids 9 of the filtering material 8 in the present invention is preferably in the range of no less than 1 µm and no greater than 40 µm, and more preferably no less than 9 µm and no greater than 24 µm. When the size of the voids 9 falls within this range, particles of PM having high accessibility for catalyst contact can enter the voids 9, whereby the catalyst performance can be sufficiently achieved. In addition, the porosity of the filtering material 8 in the present embodiment is preferably no less than 30% and no greater than 98%, and still more preferably no less than 40% and no greater than 70%. When the porosity falls within this range, the PM can be cleaned while keeping a sufficient PM collection ratio.

### Sealing Material

The sealing material 7 which may be used in the present embodiment is not particularly limited. A sealing material formed with a known material can be used as long as it has a size which enables sealing of the exhaust gas inlet path 3 and the exhaust gas outlet path 6, and can withstand use at combustion temperatures of the PM and the like. As the sealing material which may be used in the present embodiment, for example, ceramic materials such as SiC, cordierite, alumina, and silica, and metal materials may be exemplified, but a material identical to the filtering material 8 is preferably used.

### High Contact Active Catalyst

The high contact active catalyst 11 which may be used in the present embodiment is one that exhibits high activity when the accessibility with the PM is high. Since the high contact active catalyst 11 enables combustion of the PM at low temperatures when in a high contact state with the PM, continuous combustion of the PM can be carried out even if the exhaust gas to be treated has a low temperature. Therefore, continuous combustion of the PM can be satisfactorily carried out even in practical use of diesel-powered automobiles.

The high contact active catalyst 11 which may be used in the present embodiment is a high contact active catalyst that includes Ag. The high contact active catalyst 11 that includes Ag exhibits a very high PM combustion activity. The source of the high-level activation by using Ag is presumed to involve improvement of the PM combustion performance due to the active species Ag₂O on the Ag surface.

In addition, the high contact active catalyst 11 may be one including a noble metal element other than Ag, such as ruthenium or palladium.

### Low Contact Active Catalyst

The low contact active catalyst 10 which may be used in the present embodiment is a catalyst that exhibits high activity independent of accessibility with the PM. The low contact active catalyst 10 enables not only the combustion of the PM at low temperatures in a high contact state with the PM, but also combustion of the PM at low temperatures even in a low contact state with the PM. In this respect, it is presumed that the combustion of the PM at low temperatures is enabled even in low contact states owing to the melt effect of the component included in the low contact active catalyst 10 such as an alkali metal. In particular, since the low contact active catalyst 10 which may be used in the present exhibits high PM combustion performance since it is a low contact active catalyst that includes K, and K can be particularly readily transferred among alkali metals, thereby having low ionization energy.

Although the combustion of PM by the low contact active catalyst 10 can be carried out in a low contact state with the PM at only higher temperatures than in the state that achieves higher accessibility of the high contact active catalyst 11, the combustion of the PM can be carried out at lower temperatures than in the low contact state of the high contact active catalyst 11 with the PM. Accordingly, combustion of the PM which had failed in continuous combustion (for example, layered PM) due to low accessibility of the high contact active catalyst 11 with the PM can be carried out at lower temperatures than in the case of combustion using the high contact active catalyst 11.

It is preferred that the low contact active catalyst 10 used in the present embodiment further includes at least one transition metal element. Examples of the transition metal element include elements having low ionization energy in oxide form such as lanthanum, cerium, praseodymium, neodymium, manganese, cobalt, copper, molybdenum and vanadium, and examples of the alkali metal element include combinations with cesium having the lowest electronegativity.

### Manufacturing Method of Exhaust Gas Purification Filter 1

The manufacturing method of the wall-flow exhaust gas purification filter 1 according to the present embodiment includes a high contact active catalyst loading step and a low contact active catalyst loading step.

The high contact active catalyst loading step in the manufacturing method of the exhaust gas purification filter 1 is a step of passing a high contact active catalyst 11, which exhibits high activity when the accessibility with the PM is high, through the filtering material 8, to cause the high contact active catalyst 11 to be supported on the inner surface of the voids 9 in the filtering material 8.

The low contact active catalyst loading step in the manufacturing method of the exhaust gas purification filter 1 is a step of causing a low contact active catalyst 10, which exhibits high activity independent of accessibility with the PM, to be supported by applying thereof to a surface of the filtering material 8 to which the high contact active catalyst had been applied to the inner surface of the voids inside the filtering material 8 in the high contact active catalyst loading step.

In a case of an exhaust gas purification filter 1 of wall-flow type being manufactured according to the present embodiment, after the above high contact active catalyst loading step, a sealing step is performed using a sealing material, and the low contact activity catalyst loading step can be carried out thereafter by applying the low contact active catalyst 10 from the inlet side of the exhaust gas inlet path 3.

The exhaust gas purification filter 1 of the present embodiment is to be applied to a trap type exhaust gas purification device (wall-flow type).

According to the exhaust gas purification filter 1 of the present embodiment, the following effects are achieved.

Since the high contact active catalyst 11 is formed from a highly active oxidized material primarily including a noble metal or the like, it is possible to carry out low temperature combustion of the PM as a solid, provided that the accessibility is favorable similarly to a gas. With respect to the reason for the high contact active catalyst 11 achieving high accessibility in pores (voids) 9 of a wall-flow type DPF, which was formed with the filtering material 8 such as a porous ceramic and supports the catalyst component on the wall surface of the filtering material 8 or supports the catalyst on the inner face of the pores (voids) 9 in the filtering material 8, effective utilization of the micropore size formed with the particles of the high contact active catalyst 11 may be considered. More specifically, it is supposed that the contact points of the catalytic sites with the PM can be increased since a small amount of PM that is no larger than the DPF micropore size in the DPF pores can enter the gaps of the catalyst particles, whereby catalyst performance can be satisfactorily achieved (see, FIG. 3).

In addition, since combustion of PM at low temperatures can be sufficiently carried out if the high contact active catalyst 11 is in a high contact state with the PM, it is possible to carry out continuous combustion of the PM even in practical use of diesel-powered automobiles. Particularly, the high contact active catalyst 11 including Ag used in the present embodiment exhibits a very high PM combustion activity. With respect to the source of high-level activation by using Ag, improvement of the PM combustion performance due to the active species Ag₂O on the Ag surface may be assumed.

On the other hand, the low contact active catalyst 10 enables combustion of the PM even at low temperatures in a high contact state with the PM, and also enables combustion of the PM at low temperatures in a low contact state. Such advantages are speculated to be attained since combustion of the PM in a low contact state is also enabled due to transfer of an alkali metal or the like as well as a melt effect of a transition metal or the like. Particularly, the low contact active catalyst 10 that includes K for use in the present embodiment enables combustion of the PM at low temperatures independent of the contact state. Such advantages are believed to result from ease in transfer and low ionization energy of K particularly among alkali metals, leading to high activity toward the PM.

Moreover, when the contact state of the low contact active catalyst 10 with the PM is low, it is necessary to execute the combustion of the PM at higher temperatures than a case in which the accessibility of the high contact active catalyst 11 is high; however, the combustion of the PM which had failed in continuous combustion in the state of a high accessibility of the high contact active catalyst 11 layer PM) can be executed at lower temperatures than the case in which the accessibility of the high contact active catalyst 11 is low, although the temperature will be higher than the case in which the accessibility of the high contact active catalyst 11 is high.

According to the present embodiment in which the high contact active catalyst 11 having the effect as described above is loaded in the voids 9 of the filtering material 8 that correspond to sites where high accessibility with the PM is provided; and also the low contact active catalyst 10 is loaded on the surface of the filtering material 8 that corresponds to a site where low accessibility with the PM is provided, combustion of the PM at low temperatures can be carried out independent of the contact state. In other words, by using the high contact active catalyst 11 in combination with the low contact active catalyst 10 depending on the state of accumulation of the PM, the catalyst can be applied with less excess, and thus the cost can be reduced. Therefore, according to the present embodiment, continuous combustion of the PM is enabled in practical use of diesel-powered automobiles when the amount of the PM is small, and combustion of the PM at low temperatures is enabled even though the amount of the PM increased to result in layering. Accordingly, a loss of fuel mileage due to forced regeneration, and deterioration of the catalyst can be suppressed, and the load on the automobile can be reduced.

The present invention is not limited to the foregoing embodiments, and modifications, alterations and the like within the scope which allows for achieving the object of the present invention are included in the present invention.

### EXAMPLES

Next, the present invention is explained in more detail with reference to Examples; however, the present invention is not limited thereto.

### Test Example 1 (5% by mass Ag/TiO₂ + PM:TC)

Commercially available reagent TiO₂, silver nitrate, and H₂O were weighed to make a predetermined composition, which was mixed to obtain an aqueous solution. This aqueous solution was dried to solidify under reduced pressure, and dried thereafter at 200°C. Next, after particle size regulation was conducted so as to yield powders of no larger than 2 µm, baking was carried out at 700°C for 2 hrs to obtain catalyst powders. The catalyst powders were mixed with PM while grinding at a ratio of 20:1 to obtain a sample in a state of high accessibility with the PM (5% by mass Ag/ TiO₂ + PM:TC). With respect to the sample thus obtained, measurement of the PM combustion temperature was carried out under the conditions described hereafter. The results are shown in Table 1.

### Conditions for Measurement of PM Combustion Temperature

Measurement apparatus: TG/DTA (manufactured by SII NanoTechnology Inc., EX STAR 6000TG/DTA)
Heating conditions: 20°C/min
Atmosphere: Dry Air
Amount of sample: 10 mg (amount of PM included: 5% by mass)
Flow rate: SV = 60,000 h⁻¹

### Conditions for Sample Preparation

State of high accessibility (tight contact: TC): mixed while grinding to no larger than 2 µm with a mortar and pestle
State of low accessibility (loose contact: LC): mixed using a spatula for 10 min

### Test Example 2 (10% by mass Ag/CeO₂ + PM:TC)

Commercially available reagent CeO₂, silver nitrate, and H₂O were weighed to make a predetermined composition, which was mixed to obtain an aqueous solution. This aqueous solution was subjected to an operation similar to that in Test Example 1 to obtain a desired sample (10% by mass Ag/CeO₂ + PM:TC). The sample thus obtained was subjected to measurement of the PM combustion temperature under the conditions described above. The results are shown in Table 1.

### Test Example 3 (5% by mass K/TiO₂ + PM:TC)

Commercially available reagent TiO₂, potassium carbonate, and H₂O were weighed to make a predetermined composition, which was mixed to obtain an aqueous solution. This aqueous solution was subjected to an operation similar to that in Test Example 1 to obtain a desired sample (5% by mass K/TiO₂ + PM:TC). The sample thus obtained was subjected to measurement of the PM combustion temperature under the conditions described above. The results are shown in Table 1.

### Test Example 4 (5% by mass K/TiO₂ + PM:LC)

To catalyst powders similar to Test Example 3 was mixed the PM using a spatula at a ratio of 20:1 to obtain a sample in a state of low accessibility with the PM (5% by mass K/TiO₂ + PM:LC). The sample thus obtained was subjected to measurement of the PM combustion temperature under the conditions described above. The results are shown in Table 1.

### Comparative Test Example 1 (PM)

With respect to the PM powders collected from a diesel generator, measurement of the PM combustion temperature was carried out under the conditions described above. The results are shown in Table 1.

### Comparative Test Example 2 (5% by mass Ag/TiO₂ + PM:LC)

To the catalyst powders obtained in Test Example 1 was mixed the PM using a spatula at a ratio of 20:1 to obtain a sample in a state of a low accessibility with the PM (5% by mass Ag/TiO₂ + PM:LC). The sample thus obtained was subjected to measurement of the PM combustion temperature under the conditions described above. The results are shown in Table 1.

### Comparative Test Example 3 (10% by mass Ag/CeO₂ + PM:LC)

To the catalyst powders obtained in Test Example 2 was mixed the PM using a spatula at a ratio of 20:1 to obtain a sample in a state of a low accessibility with the PM (10% by mass Ag/CeO₂ + PM:LC). The sample thus obtained was subjected to measurement of the PM combustion temperature under the conditions described above. The results are shown in Table 1.

**Table 1**

| | Catalyst species | Accessibility | Noble metal | Transition metal | Alkali metal | Peak temperature |
|---|---|---|---|---|---|---|
| Test Example 1 | Catalyst active upon high contact | High | Ag | Ti | - | 333 |
| Test Example 2 | Catalyst active upon high contact | High | Ag | Ce | - | 343 |
| Test Example 3 | Catalyst active upon low contact | High | - | Ti | K | 411 |
| Test Example 4 | Catalyst active upon low contact | Low | - | Ti | K | 428 |
| Comparative Test Example 1 | PM alone | - | - | - | - | 668 |
| Comparative Test Example 2 | Catalyst active upon high contact | Low | Ag | Ti | - | 522 |
| Comparative Test Example 3 | Catalyst active upon high contact | Low | Ag | Ce | - | 571 |

The peak temperatures in Table 1 mean the PM combustion peak temperatures in TG/DTA chart. Comparative Test Example 1 demonstrates a case in which only the PM was used, and the PM combustion peak temperature then was proven to be 668°C. Test Examples 1 and 2 demonstrate a case in which high accessibility of the high contact active catalyst was provided, and both exhibited high activity with the PM combustion peak temperature of no higher than 350°C. In contrast, as indicated by Comparative Test Examples 2 and 3, the combustion peak temperatures were significantly elevated, i.e. to 522°C and 571 °C, when low accessibility was provided even though the high contact active catalyst was used. Accordingly, it was revealed that the combustion of the PM at low temperatures could not be executed with the high contact active catalyst when the accessibility was low.

As indicated by Test Example 3, in the case of the low contact active catalyst, the PM combustion peak temperature was 411 °C when the accessibility was high, while the PM combustion peak temperature was as low as 428°C even when the accessibility was low as in the case of Test Example 4. Thus, combustion at a low temperature was enabled independent of the accessibility. It was believed that the grounds for suppression of significant elevation of the combustion peak temperatures even in the case of the accessibility being high involved an original lower activity than the high contact active catalyst. In addition, it was presumed that the grounds for high activity even in the case of the accessibility being low involved improvement of the accessibility due to transfer and/or melting of the active species. From the foregoing results, it was revealed that the catalyst performances can be sufficiently achieved, and the combustion of the PM at low temperatures can be efficiently carried out by distinctively applying the high contact active catalyst and the low contact active catalyst to sites having a high accessibility and a low accessibility, respectively.

For example, in the case of DPFs, PM no larger than the micropore size enter the pores (voids) and are collected, but PM no smaller than the micropore size are collected on the wall surface of the flow path. Since the volume of the PM decreases as the particle size becomes smaller, just a small volume of the PM shall be collected in the pores. Therefore, high accessibility of the catalyst with the PM is provided in the pores of the micropore size level. To the contrary, the PM on the wall surface has a particle size greater to some extent, and layering occurs as the amount of the collection increases; therefore, low accessibility with the catalyst is provided, and there is ultimately no contacting. Therefore, it was considered that effective utilization of the catalyst is enabled by distinctively applying the high contact active catalyst into the pores, and the low contact active catalyst to the wall surface, respectively.

### Example 1 (void: 5% by mass Ag/TiO₂ + PM, surface: 5% by mass K/TiO₂ + PM)

The catalyst powders obtained in Test Example 1, silica sol (Nissan Chemical Industries, Ltd.), and H₂O were weighed to make a predetermined composition, which was mixed while grinding using a ball mill for 24 hrs to obtain a catalyst slurry A. In addition, the catalyst powders obtained in Test Example 3, silica sol, and H₂O were weighed to make a predetermined composition, which was mixed while grinding using a ball mill for 24 hrs to obtain a catalyst slurry B.

The catalyst slurry A thus obtained was loaded by impregnation with a commercially available wall-flow type DPF (manufactured by NGK), and the excess slurry on the surface was sufficiently removed with an air gun. Thereafter, baking was carried out at 700°C for 2 hrs to load 30 g/L of the catalyst powders of the Test Example 1 inside the voids of the DPF. Subsequently, after the DPF was alternately sealed, the catalyst slurry B was loaded by impregnation, and the excess slurry was sufficiently removed with an air gun. Next, baking was carried out at 700°C for 2 hrs to load 30 g/L of the catalyst powders of the Test Example 3 on the surface of the DPF. Using the DPF having the catalyst powders of Test Example 1 and the catalyst powders of Test Example 3 loaded thereon, collection of the PM was carried out by means of a PM collector attached to an exhaust gas pipe of a diesel generator. The amount of the collected PM in this process was 5 g/L. With respect to the DPF after collecting the PM, measurement of the PM combustion temperature was carried out under the conditions described above. The results are shown in Table 2.

### Comparative Example 1 (void and surface: 5% by mass Ag/TiO₂ + PM)

After a commercially available wall-flow type DPF (manufactured by NGK) was alternately sealed, the aforementioned catalyst slurry A was loaded by impregnation, and the excess slurry was sufficiently removed with an air gun. Thereafter, baking was carried out at 700°C for 2 hrs to load 60 g/L of the catalyst powders of the Test Example 1 in the voids and on the surface of the DPF. Using the DPF having the catalyst powders of Test Example 1 loaded thereon, collection of the PM was carried out in a similar manner to Example 1, and with respect to the DPF after collecting the PM, measurement of the PM combustion temperature was carried out under the conditions described above. The results are shown in Table 2.

### Comparative Example 2 (void and surface: 5% by mass K/TiO₂ + PM)

After a commercially available wall-flow type DPF (manufactured by NGK) was alternately sealed, the aforementioned catalyst slurry B was loaded by impregnation, and the excess slurry was sufficiently removed with an air gun. Thereafter, baking was carried out at 700°C for 2 hrs to load 60 g/L of the catalyst powders of the Test Example 3 in the voids and on the surface of the DPF. Using the DPF having the catalyst powders of Test Example 3 loaded thereon, collection of the PM was carried out in a similar manner to Example 1, and with respect to the DPF after collecting the PM, measurement of the PM combustion temperature was carried out under the conditions described above. The results are shown in Table 2.

### Comparative Example 3 (void and surface: 5% by mass Ag/TiO₂ + 5% by mass K/TiO₂ + PM)

The catalyst powders of Test Example 1, the catalyst powders of Test Example 3, silica sol (Nissan Chemical Industries, Ltd.), and H₂O were weighed to make a predetermined composition, which was mixed while grinding using a ball mill for 24 hrs to obtain a catalyst slurry C. After a commercially available wall-flow type DPF (manufactured by NGK) was alternately sealed, the aforementioned catalyst slurry C was loaded by impregnation, and the excess slurry was sufficiently removed with an air gun. Thereafter, baking was carried out at 700°C for 2 hrs to load 60 g/L of a mixture of the catalyst powders of Test Example 1 and the catalyst powders of the Test Example 3 in the voids and on the surface of the DPF. Using the DPF having the catalyst powders of Test Example 1 and the catalyst powders of Test Example 3 loaded thereon, collection of the PM was carried out in a similar manner to Example 1, and with respect to the DPF after collecting the PM, measurement of the PM combustion temperature was carried out under the conditions described above. The results are shown in Table 2.

### Comparative Example 4 (void: 5% by mass K/TiO₂, surface: 5% by mass Ag/ TiO₂ + PM)

The aforementioned catalyst slurry B loaded by impregnation with a commercially available wall-flow type DPF (manufactured by NGK), and the excess slurry on the wall surface was sufficiently removed with an air gun. Thereafter, baking was carried out at 700°C for 2 hrs to load 30 g/L of the catalyst powders of Test Example 3 inside the voids of the DPF. Next, after the DPF was alternately sealed, the aforementioned catalyst slurry A was loaded by impregnation in a similar manner, and the excess slurry was sufficiently removed with an air gun. Then, baking was carried out at 700°C for 2 hrs to load 30 g/L of the catalyst powders of Test Example 1 on the surface of the DPF. Using the DPF having the catalyst powders of Test Example 1 and the catalyst powders of Test Example 3 loaded thereon, collection of the PM was carried out in a similar manner to Example 1, and with respect to the DPF after collecting the PM, measurement of the PM combustion temperature was carried out under the conditions described above. The results are shown in Table 2.

### Comparative Example 5 (void: RuO₂ + PM, surface: 10% by mass Cs₂CO₃/LaMnOₛ + PM)

Ruthenium chloride of a commercially available special grade reagent was baked at 800°C, and catalyst powders were prepared by regulating particle size so as to give powders of no larger than 2 µm. The catalyst powders, silica sol (Nissan Chemical Industries, Ltd.), and H₂O were weighed to make a predetermined composition, which was mixed while grinding using a ball mill for 24 hrs to obtain a catalyst slurry C. Next, manganese nitrate and lanthanum nitrate of a commercially available special grade reagent, and H₂O were weighed to make a predetermined composition, and an aqueous solution "a" was obtained. Separately, sodium carbonate and H₂O were weighed to make a predetermined composition, and an aqueous solution "b" was obtained. After the solution "a" was added dropwise to the solution "b", aging was carried out at 60°C for 1 hour. Then, filtration and washing with water followed, and after calcination at 350°C, particle size regulation was conducted so as to give powders of no larger than 2 µm. The catalyst powders (10% by mass Cs₂CO₃/LaMnO₃) were prepared by baking the powders at 800°C for 10 hrs. The catalyst powders, silica sol (Nissan Chemical Industries, Ltd.), and H₂O were weighed to make a predetermined composition, which was mixed while grinding using a ball mill for 24 hrs to obtain a catalyst slurry D.

The catalyst slurry C was loaded by impregnation onto a commercially available wall-flow type DPF (manufactured by IBIDEN CO., LTD.), and the excess slurry on the wall surface was sufficiently removed with an air gun. Next, baking was carried out at 700°C for 2 hrs to load 30 g/ L of the catalyst powders RuO₂ inside the voids of the DPF. Then, after the DPF was alternately sealed, the catalyst slurry D was loaded by impregnation in a similar manner, and the excess slurry was sufficiently removed with an air gun. Next, baking was carried out at 700°C for 2 hrs to load 30 g/L of the catalyst powders (10% by mass Cs₂CO₃/LaMnO₃) on the wall surface of the DPF. Using this DPF, collection of the PM was carried out in a similar manner to Example 1, and with respect to the DPF after collecting the PM, measurement of the PM combustion temperature was carried out under the conditions described above. The results are shown in Table 2.

**Table 2**

| | Pore | Wall surface | Noble metal | Transition metal | Alkali metal | First peak | Second peak |
|---|---|---|---|---|---|---|---|
| Example 1 | Catalyst active upon high contact | Catalyst active upon low contact | Ag | Ti | K | 333 | 428 |
| Comparative Example 1 | Catalyst active upon high contact | Catalyst active upon high contact | Ag | Ti | - | 341 | 523 |
| Comparative Example 2 | Catalyst active upon low contact | Catalyst active upon low contact | - | Ti | K | - | 424 |
| Comparative Example 3 | Mixture | Mixture | Ag | Ti | K | 364 | 432 |
| Comparative Example 4 | Catalyst active upon low contact | Catalyst active upon high contact | Ag | Ti | K | 410 | 541 |
| Comparative Example 5 | Catalyst active upon high contact | Catalyst active upon low contact | Ru | LaMn | Cs | 481 | 522 |

In Example 1 in which the high contact active catalyst was applied to the pores (voids) and the low contact active catalyst was applied on the wall surface of the flow path (see, FIG. 2), two peaks, i.e. the first peak and the second peak, were found as PM combustion peaks, and the peak temperatures were 333°C and 428°C, respectively. It was presumed that the first peak was a combustion peak of PM having high accessibility with the catalyst in the pores, and the second peak was an overlap of a combustion peak of PM not having high accessibility in the pores, and a combustion peak of PM having low accessibility which layered on the wall surface. From these results, it was revealed that, when the amount of the PM is as small as being constituted with only the PM having high accessibility in the pores, continuous combustion of the PM is enabled under the most frequently occurring driving conditions in diesel-powered automobiles (practical use range: exhaust temperature being 200°C to 400°C). In addition, also in the case in which the amount of the PM increased, or in the case in which the particle size of the PM is no smaller than the micropore size, regeneration control can be carried out at significantly lower temperatures as compared with 550°C to 650°C employed heretofore.

To the contrary, in Comparative Example 1 in which the high contact active catalyst was applied to the pores and on the wall surface, two peaks, i.e. the first peak and the second peak, were found as the PM combustion peaks, and the peak temperatures were 341 °C and 523°C, respectively. It was presumed that the first peak was a combustion peak of the PM having a high accessibility in the pores, and the second peak was a combustion peak of the PM having low accessibility on the wall surface. It was revealed that combustion of the PM at low temperatures can be carried out when the amount of the PM is as small as being constituted with only the PM having high accessibility in the pores, but when the particle size of the PM is no smaller than the micropore size, low accessibility may be provided, leading to low temperature combustion not being possible.

In Comparative Example 2 in which the low contact active catalyst was applied in the pores and on the wall surface, a single combustion peak of the PM was found, and the peak temperature thereof was 424°C. It was considered that this results from combustion of both the PM in the pore and the PM on the wall surface at similar temperatures, since the performances of the catalyst material in Comparative Example 2 do not vary greatly irrespective of the accessibilities (see, Test Examples 3 and 4). In addition, it was revealed that when the PM is present in a large quantity or when the particle size of the PM is no smaller than the micropore size, performance approximately similar to that of Example 1 is achieved, while combustion of the PM at low temperatures cannot be executed when the amount of the PM is as small as being constituted with only the PM having high accessibility to the pores.

In Comparative Example 3 in which a mixture of the high contact active catalyst and the low contact active catalyst was applied to the pores and on the wall surface, two peaks, i.e. the first peak and the second peak, were found as the PM combustion peaks, and the peak temperatures were 364°C and 432°C, respectively. It was presumed that the first peak suggested the reduced effect of the high contact active catalyst by mixing the high contact active catalyst and the low contact active catalyst. Additionally, the second peak was presumed to result from the combustion of the PM having low accessibility on the wall surface, and is considered to suggest the influence from the low contact active catalyst. Also in Comparative Example 3, similarly to Comparative Example 2, it was revealed that when the PM is present in a large quantity or when the particle size of the PM is no smaller than the micropore size, performance similar to that of Example 1 is achieved, while combustion of the PM at low temperatures cannot be carried out when the amount of the PM is as small as being constituted with only the PM having a high accessibility in the pores.

Contrary to Example 1, in Comparative Example 4 in which the low contact active catalyst was applied to the pores and the high contact active catalyst was applied on the wall surface, two peaks, i.e. the first peak and the second peak, were found as the PM combustion peaks, and the peak temperatures were 410°C and 541 °C, respectively. It was presumed that the first peak was a combustion peak of the PM having high accessibility in the pores, and the second peak was a combustion peak of the PM having low accessibility on the wall surface. From these results, it was revealed in Comparative Example 4 that when the PM no larger than the micropore size accumulated in the pores, continuous combustion of the PM is impossible under the most frequently occurring driving conditions in diesel-powered automobiles (practical use range: exhaust temperature being 200°C to 400°C), and that combustion of the PM at low temperatures cannot be carried out due to deteriorated accessibilities when the PM is present in a large quantity or when the particle size of the PM is no smaller than the micropore size.

In Comparative Example 5 in which RuO₂ for the high contact active catalyst was applied in the pores (voids) and Cs₂CO₃/LaMnO₃ for the low contact active catalyst was applied on the wall surface of the flow path, two peaks, i.e. the first peak and the second peak, were found as the PM combustion peaks, and the peak temperatures were 481 °C and 522°C, respectively. The first peak was considered to result from SOF (Soluble Organic Fraction) that is one component in the PM.

From the results described above, it was ascertained that the high contact active catalyst must include Ag, and the low contact active catalyst must include K. In addition, it was proven that in the most appropriate conditions, the way of distinctively applying to DPF includes application of the high contact active catalyst in the pores (voids), and application of the low contact active catalyst on the wall surface of the flow path as demonstrated in Example 1. With respect to the causes of the high accessibility of the high contact active catalyst in Example 1, it is speculated to involve the level of activity of the high contact active catalyst, the amount of PM, and the small particle size, as well as further enhanced accessibility by the PM entering into the pores no larger than the micropore size of DPF constituted with particles of the high contact active catalyst as shown in FIG. 2. Moreover, it was considered that the PMs becomes more likely to enter the pores no larger than the micropore size of DPF constituted with particles of the high contact active catalyst since the particles of the PM are classified by the DPF pores into the range of no larger than the micropore size of the DPF.

An exhaust gas purification filter, which can continuously combust PM more efficiently compared to those traditionally employed even for low temperature and a manufacturing method thereof are provided. An exhaust gas purification filter 1, which includes an exhaust gas inlet path 3, a filtering material 8 that forms a partition wall 4 of the exhaust gas inlet path 3 and has voids 9, and an exhaust gas outlet path 6, exits, has a low contact active catalyst 10 that includes K and exhibits a high activity independent of the accessibility with the particulate matter loaded on an inner surface of the partition wall 4, and has a high contact active catalyst 11 that includes Ag and exhibits a high activity when the accessibility with the particulate matter is high, loaded on an inner surface of the voids 9 in the filtering material 8, and a manufacturing method thereof is provided.

## Claims

1. An exhaust gas purification filter (1) produced according to claim 5 which is disposed in an exhaust passage of an internal combustion engine, and cleans particulate matter in exhaust gas (2) discharged from the internal combustion engine, the filter comprising:
an exhaust gas inlet path (3) through which the exhaust gas (2) enters,
a filtering material (8) that forms a partition wall (4) of the exhaust gas inlet path (3) and has voids (9); and
an exhaust gas outlet path (6) through which the exhaust gas (5), which had entered the exhaust gas inlet path (3) and passed through the filtering material (8), exits,
wherein catalyst (10), which comprises K , is supported at a surface of the partition wall, and
wherein an inner surface of the voids in the filtering material supports a catalyst (11) that comprises Ag.

2. The exhaust gas purification filter (1) according to claim 1, wherein:
the exhaust gas inlet path (3) and the exhaust gas outlet path (6) are formed with a plurality of cells disposed to be alternately adjacent via the filtering material (8);
the cells that form the exhaust gas inlet path (3) are open at an end on an upstream side, and sealed at an end on a downstream side; and
the cells that form the exhaust gas outlet path (6) are sealed at the end on the upstream side, and open at the end on the downstream side.

3. The exhaust gas purification filter (1) according to claim 1 or 2, wherein the filtering material (8) comprises a porous ceramic.

4. The exhaust gas purification filter (1) according to any one of claims 1 to 3, wherein the catalyst (10) further comprises at least one transition metal element.

5. A method of manufacturing a wall-flow exhaust gas purification filter (1) comprising:
a catalyst loading step of passing a catalyst, which comprises Ag , through a filtering material having voids, to cause the catalyst comprising Ag to be supported on an inner surface of the voids of the filtering material; , and
a catalyst loading step of causing a catalyst, which comprises K to be supported by applying thereof to the surface of the filtering material to which the catalyst comprising Ag had been applied to the inner surface of the voids inside the filtering material in the catalystcomprising Ag loading step.

## Patentansprüche

1. Abgasreinigungsfilter (1), hergestellt gemäß Anspruch 5, welcher in einer Abgasleitung eines Verbrennungsmotors angeordnet ist, und der Feststoffe in Abgas (2) reinigt, die aus dem Verbrennungsmotor freigesetzt werden, wobei der Filter umfasst:
einen Abgas-Einlassweg (3), durch den das Abgas (2) eintritt, ein Filtermaterial (8), das eine Trennwand (4) des Abgas-Einlasswegs (3) bildet und das Poren (9) aufweist; und
einen Abgas-Auslassweg (6), durch den das Abgas (5), das in den Abgas-Einlassweg (3) eingetreten ist und durch das Filtermaterial (8) hindurchgetreten ist, austritt,
wobei ein Katalysator (10), welcher K umfasst, auf einer Oberfläche der Trennwand geträgert ist, und
wobei eine Innenfläche der Poren in dem Filtermaterial einen Katalysator (11) trägt, der Ag umfasst.

2. Abgasreinigungsfilter (1) gemäß Anspruch 1, wobei:
der Abgas-Einlassweg (3) und der Abgas-Auslassweg (6) mit einer Vielzahl an Zellen gebildet sind, die so angeordnet sind,
dass sie über das Filtermaterial (8) abwechselnd benachbart sind;
die Zellen, die den Abgas-Einlassweg (3) bilden an einem Ende an einer stromaufwärts gelegenen Seite offen sind und an einem Ende an einer stromabwärts gelegenen Seite verschlossen sind; und
die Zellen, die den Abgas-Auslassweg (6) bilden an dem Ende an der stromaufwärts gelegenen Seite verschlossen sind und an dem Ende an der stromabwärts gelegenen Seite offen sind.

3. Abgasreinigungsfilter (1) gemäß Anspruch 1 oder 2, wobei das Filtermaterial (8) poröse Keramik umfasst.

4. Abgasreinigungsfilter (1) gemäß einem der Ansprüche 1 bis 3, wobei der Katalysator (10) weiterhin mindestens ein Übergangsmetallelement umfasst.

5. Verfahren zur Herstellung eines Wandfluss-Abgasreinigungsfilters (1) umfassend:
einen Katalysator-Ladeschritt, wobei ein Katalysator, der Ag umfasst, durch ein Filtermaterial, das Poren aufweist, hindurchtritt, um zu bewirken, dass der Katalysator, der Ag umfasst, auf einer Innenfläche der Poren des Filtermaterials geträgert wird;
und
einen Katalysator-Ladeschritt, um zu bewirken, dass ein Katalysator, der K umfasst, durch Aufbringen desselben auf die Oberfläche des Filtermaterials geträgert wird, auf das der Katalysator, der Ag umfasst, auf die Innenfläche der Poren innerhalb des Filtermaterials in dem Ladeschritt des Katalysators, der Ag umfasst, aufgebracht worden ist.

## Revendications

1. Filtre de purification de gaz d'échappement (1) produit selon la revendication 5, qui est disposé dans un passage d'échappement d'un moteur à combustion interne et qui nettoie la matière particulaire dans le gaz d'échappement (2) déchargé du moteur à combustion interne, le filtre comprenant :
un passage d'entrée de gaz d'échappement (3) à travers lequel le gaz d'échappement (2) entre,
un matériau filtrant (8) qui forme une paroi de séparation (4) du passage d'entrée de gaz d'échappement (3) et a des vides (9) ; et
un passage de sortie de gaz d'échappement (6) à travers lequel le gaz d'échappement (5), qui a pénétré dans le passage d'entrée de gaz d'échappement (3) et traversé le matériau filtrant (8), sort,
dans lequel le catalyseur (10), qui comprend du potassium (K), est supporté au niveau d'une surface de la paroi de séparation, et
dans lequel une surface interne des vides dans le matériau filtrant supporte un catalyseur (11) qui comprend de l'argent (Ag).

2. Filtre de purification de gaz d'échappement (1) selon la revendication 1, dans lequel :
le passage d'entrée de gaz d'échappement (3) et le passage de sortie de gaz d'échappement (6) sont formés avec une pluralité de cellules disposées pour être adjacentes de manière alternée via le matériau filtrant (8) ;
les cellules qui forment le passage d'entrée de gaz d'échappement (3) sont ouvertes au niveau d'une extrémité du côté en amont et hermétiquement fermées au niveau d'une extrémité du côté en aval ; et
les cellules qui forment le passage de sortie de gaz d'échappement (6) sont hermétiquement fermées au niveau de l'extrémité du côté en amont, et ouvertes au niveau de l'extrémité du côté en aval.

3. Filtre de purification de gaz d'échappement (1) selon la revendication 1 ou 2, dans lequel le matériau filtrant (8) comprend une céramique poreuse.

4. Filtre de purification de gaz d'échappement (1) selon l'une quelconque des revendications 1 à 3, dans lequel le catalyseur (10) comprend en outre au moins un élément métallique de transition.

5. Procédé pour fabriquer un filtre de purification de gaz d'échappement (1) à écoulement sur paroi, comprenant :
une étape de chargement de catalyseur consistant à faire passer un catalyseur, qui comprend de l'argent (Ag), à travers un matériau filtrant ayant des vides,
pour amener le catalyseur comprenant de l'argent (Ag) à être supporté sur une surface interne des vides du matériau filtrant ; et
une étape de chargement de catalyseur consistant à amener un catalyseur, qui comprend du potassium (K), à être supporté en l'appliquant sur la surface du matériau filtrant sur laquelle le catalyseur comprenant de l'argent (Ag) a été appliqué sur la surface interne des vides à l'intérieur du matériau filtrant à l'étape de chargement du catalyseur comprenant de l'argent (Ag).
